# EUROPÄISCHE PATENTSCHRIFT

(11) **EP 1 490 196 B1**
(45) Veröffentlichungstag und Bekanntmachung des Hinweises auf die Patenterteilung: **12.07.2006**
(21) Anmeldenummer: 03714805.3
(22) Anmeldetag: 12.03.2003
(51) Int. Cl.: B23P 9/00, B24B 33/02, F02F 1/20, F16J 10/04

(54) **VERFAHREN ZUM FEINBEARBEITEN VON ZYLINDRISCHEN INNENFLÄCHEN**
METHOD FOR FINE MACHINING CYLINDRICAL INNER SURFACES
PROCEDE D'USINAGE DE PRECISION DE SURFACES INTERIEURES CYLINDRIQUES

(30) Priorität: 30.03.2002 DE 10214374
(43) Veröffentlichungstag der Anmeldung: 29.12.2004
(73) Patentinhaber: DaimlerChrysler AG, 70567 Stuttgart (DE)
(72) Erfinder: HÄRER, Ulrich, 73635 Rudersberg-Lindental (DE); RÜCKERT, Franz, 73760 Ostfildern (DE); SCHÄFER, Helmut, 71394 Kernen (DE); STOCKER, Peter, 71560 Sulzbach (DE); STORZ, Oliver, 73776 Altbach (DE)
(74) Vertreter: Närger, Ulrike
(86) Internationale Anmeldenummer: PCT/EP2003/002525
(87) Internationale Veröffentlichungsnummer: WO 2003/082514

(56) Entgegenhaltungen:
- EP-A- 0 693 618
- DE-A- 3 202 307
- DE-A- 19 605 588
- DE-C- 19 601 158
- PATENT ABSTRACTS OF JAPAN vol. 010, no. 246 (M-510), 23. August 1986 (1986-08-23) -& JP 61 076221 A (DAIHATSU MOTOR CO LTD), 18. April 1986 (1986-04-18)

## Beschreibung

Die Erfindung betrifft ein Verfahren zum Bearbeiten einer zylindrischen Innenfläche nach dem Oberbegriff des Anspruchs 1.

Das Feinbearbeiten von zylindrischen Flächen, insbesondere das Feinbearbeiten von Zylinderlaufflächen von Zylinderkurbelgehäusen wird in der Regel durch Honen realisiert. Hierzu gibt es eine Vielzahl von Veröffentlichungen, wie z. B. die DE 44 32 514 A1, in der ein Verfahren beschrieben wird, durch das ein hochgenaues Endmaß einer gehonten Fläche erzielt werden kann.

Die DE 196 05 588 C2 beschreibt ein Verfahren, in dem eine Zylinderlauffläche in einem oberen und unteren Totpunkt eines Kolbens so behandelt wird, dass sie in diesen Bereichen höheren Verschleißbedingungen standhält.

Der obengenannte Stand der Technik beschränkt sich jedoch auf die Feinbearbeitung einer Fläche, die durchgehend das selbe Oberflächenmaterial aufweist. Es kann jedoch vorkommen, dass die Zylinderlauffläche durch unterschiedliche Materialien dargestellt ist. Hierbei handelt es sich um einen weicheren Bereich, der durch das Gussmaterial des Zylinderkurbelgehäuses gebildet wird, und einen härteren Bereich, der durch eine Zylinderlaufbuchse dargestellt ist.

Nächstliegender Stand der Technik DE- A-3 202 307 offenbart ein Verfahren nach dem Oberbegriff des Anspruchs 1.

In derartig gestalteten Fällen ist das Feinbearbeiten, insbesondere das Honen, besonders schwierig, da die angewendeten Bearbeitungsmittel, z. B. der Honstein, durch das weichere Material verschmiert und seine Schleifwirkung verliert.

Die Aufgabe der Erfindung besteht darin, zylindrische Innenflächen, die unterschiedliche Materialien aufweisen, so zu bearbeiten, dass die Standzeiten der Bearbeitungsmittel deutlich verbessert werden.

Die Lösung der Erfindung besteht in einem Verfahren nach Anspruch 1.

Das erfindungsgemäße Verfahren nach Anspruch 1 zeichnet sich dadurch aus, dass eine zylindrische Innenfläche, die mindestens einen weicheren und mindestens einen härten Bereich in axialer Richtung aufweist, zuerst vorgedreht wird. Das Vordrehen kann hierbei gegebenenfalls mehrere Arbeitsschritte mit mehreren Drehmeißeln und Drehparametern wie Vorschubgeschwindigkeit oder Umdrehungszahlen beinhalten. Es kann auch ein sogenanntes Feindrehen umfassen.

Hierbei wird der mindestens eine weichere Bereich auf einen höheren Durchmesser vorgedreht. Anschließend erfolgt die Feinbearbeitung durch Honen. Das Honen findet im härteren Bereich statt. Das Honen wird durch eine geeignete Steuerung auf dem Durchmesser gestoppt, auf dem der weichere Bereich vorgedreht ist. Hierdurch wird der Honstein geschont. Es erfolgt kein erhöhtes Verschmieren des Honsteins.

Unter bestimmten Qualitätsansprüchen ist es notwendig, die gesamte Fläche, den weicheren und härteren Bereich gemeinsam auf ein Endmaß zu honen. In diesem Fall wird die gesamte Fläche fertig gehont, wobei im weicheren Bereich bevorzugt weniger als 10 *µ*m im Durchmesser, besonders bevorzugt weniger als 2 *µ*m abgetragen wird. Üblicherweise beträgt der Abtrag durch das Honen 30 *µ*m. Durch die Reduzierung des Abtrags im weichen Bereich der Fläche kann so die Verschmierung des Honsteins auf einem minimalen Niveau gehalten werden.

Zur weiteren Reduzierung der Verschmierung des Honsteins ist es möglich, für den weicheren und den härteren Bereich unterschiedliche Honsteine zu verwenden. Dies kann z. B. durch eine doppelaufweitbare Honahle realisiert werden.

Ein weiterer Vorteil, der sich aus dem erfindungsgemäßen Verfahren ergibt, besteht in Drehriefen im weicheren Bereich, die durch das Vordrehen eingebracht werden und nach dem Fertighonen zumindest teilweise bestehen bleiben. Derartige Drehriefen können im Betrieb einer Brennkraftmaschine als Schmierstofftaschen (Reservoirs für Schmierstoffe) oder zur Ablagerung bzw. Abfilterung von Schmutz- bzw. Abrasionsstoffen genutzt werden.

Da es fertigungstechnisch kaum möglich ist, beim tieferen Vordrehen des weichen Bereiches genau den Übergang zwischen weichem und hartem Bereich zu treffen, ist es zweckmäßig, einen geringen Übergangsbereich des harten Bereichs tiefer vorzudrehen. Durch diese Maßnahme wird verhindert, das versehentlich im weicheren Bereich ein nennenswerter Materialabtrag durch Honen erfolgt.

In vielen Fällen ist nach dem Honen eine chemische Nachbehandlung, z. B. durch Ätzen mit Natronlauge, erforderlich. Diese erfolgt bevorzugt nur im harten Bereich, somit wird das chemische Behandlungsmittel geschont und erfährt eine längere Standzeit.

Das erfindungsgemäße Verfahren wird in zweckmäßiger Weise auf das Feinbearbeiten von Zylinderlaufflächen angewendet. In diesem Fall wird der härtere Bereich durch eine Zylinderlaufbuchse gebildet, die meistens aus einer hoch siliziumhaltigen Aluminiumlegierung, einer Gusseisenlegierung oder einer keramik- bzw. siliziumverstärkten Aluminiumlegierung besteht. Der weichere Bereich wird in diesem Fall durch das Gussmaterial des Zylinderkurbelgehäuses, z. B. durch eine Aluminiumlegierung AlSi9Cu3, gebildet.

Bevorzugte Ausgestaltungsformen der Erfindung werden im Folgenden näher erläutert.

Es zeigen:
- Fig. 1,: einen Ausschnitt einer zylindrischen Innenfläche mit einem härteren und einem weicheren Bereich vor der Bearbeitung mit einem Drehmeißel,
- Fig.2,: den Ausschnitt aus Fig. 2 nach einem Vordrehen, während eines Honens,
- Fig. 3,: vergrößerter Ausschnitt aus Fig. 1 während eines Fertighonens.

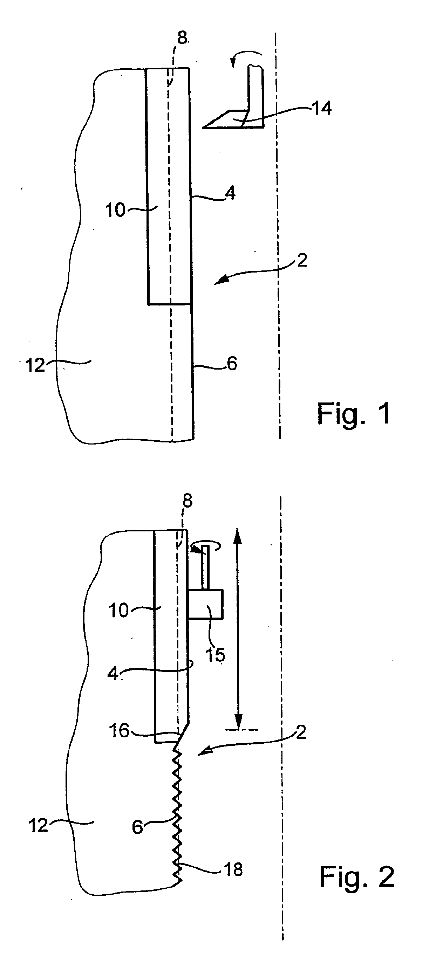

Das erfindungsgemäße Verfahren ist an Hand der Figuren 1 bis 3 schematisch veranschaulicht. In Fig. 1 ist ein Ausschnitt einer zu bearbeitenden zylindrischen Innenfläche dargestellt. Es handelt sich hierbei um die Zylinderlauffläche 2 eines Zylinderkurbelgehäuses. Die Zylinderlauffläche 2 umfässt einen härteren Bereich 4, der durch eine Zylinderlaufbuchse 10 gebildet wird und einen weicheren Bereich 6, der durch ein Gussmaterial 12 des Zylinderkurbelgehäuses gebildet wird.

Die Zylinderlaufbuchse 10 besteht aus einer übereutektischen Aluminium-Silizium-Legierung mit ca. 25 % Siliziumanteil. Der hohe Siliziumanteil in der Zylinderlaufbuchse ist für die höheren Härte verantwortlich. Dies ist auf Siliziumkristallite zurückzuführen, die makroskopisch zu höheren Härtewerten führen (Brinellhärte) als herkömmliche Aluminiumlegierungen. Das Kurbelgehäuse an sich ist durch die Legierung AlSi9Cu3 dargestellt.

Zur Bearbeitung der Zylinderlauffläche 2 wird in einem ersten Arbeitsschritt nach Fig. 1 die Zylinderlauffläche 2 mit einem Drehmeißel 14 vorgedreht. Hierbei wird der weichere Bereich 6 etwa bis auf das angestrebte Endmaß 8 vorgedreht. Es besteht jedoch eine positive Toleranz, weshalb das Vordrehen nicht über das Endmaß 8 hinausgehen darf. In der Praxis wird das Vordrehen etwa 2 *µ*m vor dem Endmaß 8 gestoppt. Dies bedeutet, dass Drehriefen 18, die durch das Vordrehen entstehen und ein Rautiefe von etwa 20 µm bis 50 µm aufweisen, teilweise über das Endmaß 8 hinausgehen. Das Aufmaß im härteren Bereich 4 beträgt etwa 30 µm.

Es besteht, wie in Fig. 2 beschrieben, ein Übergangsbereich 16, in dem der härtere Bereich 4 ebenfalls wie der weichere Bereich 6 auf nahezu Endmaß 8 vorgedreht wird. Der Übergangsbereich 16 beträgt ca. 1 mm in axialer Richtung.

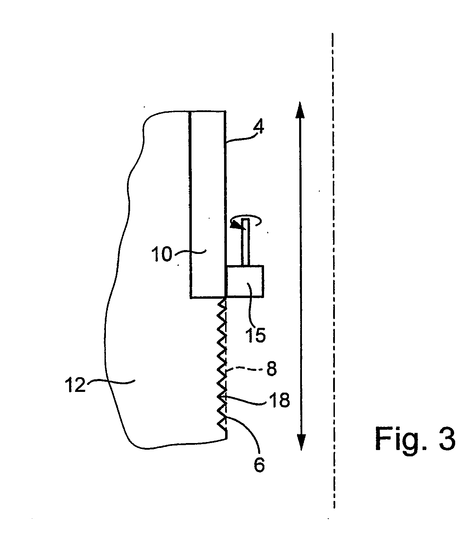

Im nächsten Arbeitsschritt wird mit einer Hohnahle 15, die hier nicht näher dargestellte Honsteine enthält der Bereich 4 bis auf annähernd Endmaß gehont (Fig. 3). Anschließend wird die gesamte Zylinderlauffläche 2 mit der Honahle 15 auf Endmaß 8 bearbeitet (Fertighonen). In diesem Schritt fährt die Honahle 15 auch über den weichen Bereich 6. Dies schadet den Honsteinen jedoch nicht, da der Materialabtrag vernachlässigbar gering ist. Der Materialabtrag beträgt beim Fertighonen etwa zwischen 2 *µ*m und 10 *µ*m. Da im weichen Bereich 6 im Wesentlichen nur obere Ränder der Drehriefen 18 abgetragen werden, bedeutet dies eine zusätzliche Verringerung des Materialabtrags im Bereich 6.

Die Drehriefen können in vorteilhafter Weise als Kanäle zur Materialabfuhr der beim Fertighonen abgetragenen Materialpartikel fungieren. Beim Vordrehen ist hierbei darauf zu achten, dass die Drehriefen eine geeignete Tiefe erhalten, um die - abhängig vom Honsteinmaterial - entstanden Materialpartikel abzutransportieren. Der Abtransport erfolgt jeweils in Unterstützung von Honöl, das aus der Honahle zwischen den Honsteinen ausgestoßen wird. Auf diese Weise tragen die Drehriefen dazu bei, dass ein vorzeitiges Verschmieren der Honsteine verhindert wird.

Das Verschmieren der Honsteine, sowie die Qualität der gehonten Oberfläche ist im starken Maße von der Kombination Oberflächenmaterial und Honsteinmaterial abhängig. Die Standzeit der Honsteine kann noch weiter verlängert werden, wenn unterschiedliche, an die jeweilige Oberfläche angepasste Honsteine verwendet werden. Dies ist z. B. durch eine sogenannte doppelaufweitbare Honahle realisierbar. So ist es mit einer derartigen Honahle möglich, an gewünschten Stellen bestimmte Honsteine radial hervorzuheben. Die übrigen Honsteine kommen somit nicht mehr mit der zu bearbeitenden Oberfläche in Berührung.

Für den weicheren Bereich 6 kann es vorteilhaft sein, Honsteine auf Diamantbasis zu verwenden. Andererseits werden für den härteren Bereich 4 bevorzugt Honsteine auf Siliziumkarbidbasis eingesetzt. Weitere Merkmale der Honsteine sind deren Porosität (zur Aufnahme von Partikel), die Korngröße und die Korndichte.

Nach der Feinbearbeitung wird die Fläche im Bereich 4 mit Natronlauge behandelt. Hierdurch wird Aluminium an der Oberfläche ausgelöst, wobei harte Siliziumkristallite stehen bleiben. So entstandene Vertiefungen dienen im Betrieb als Schmierstofftaschen. Da der weichere Bereich 6 nicht mit Natronlauge behandelt wird, wird in der Serienproduktion die Standzeit der Natronlauge verlängert.

Der Bereich 6 weist zwar nach der Feinbearbeitung eine rauere Oberfläche auf als der Bereich 4. Bevorzugt befindet sich der Bereich 6 jedoch unterhalb eines unteren Totpunktes eines Kolbenrings und unterliegt deshalb nicht den selben Anforderungen bezüglich der Oberflächenbeschaffenheit wie der Bereich 4. Die Überreste der Drehriefen dienen ebenfalls als Schmierstofftaschen, zusätzlich werden durch sie Schmutzpartikel herausgefiltert, die aus einem Ölraum auf die Zylinderlauffläche gelangen.

Grundsätzlich ist das erfindungsgemäße Verfahren auf alle Bauteile anwendbar, die lokale Werkstoffverstärkung aufweisen und besonders hochwertige Oberflächen benötigen. Dies trifft gerade auf hochbelastete Bereiche, insbesondere auf dem Gebiet der Brennkraftmaschinen, zu. Als Beispiele seien hierfür Reibflächen wie Zylinderlaufflächen, Lager für Kurbelwellen, Nockenwellen oder im Getriebegehäuse genannt.

## Patentansprüche

1. Verfahren zum Bearbeiten einer zylindrischen Innenfläche,insbesondere einer Zylinderlauffläche (2), die in axialer Richtung Materialien verschiedener Härten aufweist, **gekennzeichnet durch** die folgenden Schritte:
• Vordrehen der zylindrischen Innenfläche,
• wobei mindestens ein weicherer Bereich (6) der zylindrischen Innenfläche auf einen größeren Durchmesser vorgedreht wird als mindestens ein härterer Bereich (4),
• Honen mindestens des härteren Bereichs (4) bis auf das Durchmesserniveau des weicheren Bereichs (6).

2. Verfahren nach Anspruch 1,
**dadurch gekennzeichnet,**
**dass** der härtere Bereich (4) und der weichere Bereich (6) auf ein Endmaß (8) fertig gehont werden.

3. Verfahren nach Anspruch 2,
**dadurch gekennzeichnet,**
**dass** ein radialen Materialabtrag durch das Fertighonen weniger als 10 µm beträgt.

4. Verfahren nach Anspruch 2 oder 3,
**dadurch gekennzeichnet,**
**dass** der härtere Bereich (4) und der weichere Bereich (6) durch unterschiedliche Honsteine fertig gehont werden.

5. Verfahren nach einem der vorhergehenden Ansprüche,
**dadurch gekennzeichnet,**
**dass** nach dem Honen des härteren Bereiches im weicheren Bereich (6) Drehriefen (18) oder Honriefen bestehen bleiben.

6. Verfahren nach einem der vorhergehenden Ansprüche,
**dadurch gekennzeichnet,**
**dass** in einem Übergangsbereich (16) zwischen weicherem Bereich (6) und härterem Bereich (4) der härtere Bereich (4) bis auf den Durchmesser des weicheren Bereichs (6) vorgedreht wird.

7. Verfahren nach einem der vorhergehenden Ansprüche,
**dadurch gekennzeichnet,**
**dass** eine anschließende chemische Behandlung der Fläche nur im härteren Bereich (4) erfolgt.

## Claims

1. Method for machining a cylindrical inner surface, in particular a cylinder running surface (2), which has materials of different hardnesses in the axial direction, **characterized by** the following steps:
• pre-turning of the cylindrical inner surface,
• with at least one softer area (6) of the cylindrical inner surface being pre-turned to a greater diameter than at least one harder area (4),
• honing of at least the harder area (4) down to the diameter level of the softer area (6).

2. Method according to Claim 1, **characterized in that** the harder area (4) and the softer area (6) are finish-honed to a final dimension (8).

3. Method according to Claim 2, **characterized in that** a radial removal of material by the finish-honing is less than 10 µm.

4. Method according to Claim 2 or 3, **characterized in that** the harder area (4) and the softer area (6) are finish-honed by different honing stones.

5. Method according to one of the preceding claims, **characterized in that**, after the honing of the harder area, turning grooves (18) or honing grooves remain in the softer area (6).

6. Method according to one of the preceding claims, **characterized in that**, in a transitional area (16) between the softer area (6) and the harder area (4), the harder area (4) is pre-turned down to the diameter of the softer area (6).

7. Method according to one of the preceding claims, **characterized in that** a subsequent chemical treatment of the surface takes place only in the harder area (4).

## Revendications

1. Procédé pour l'usinage d'une surface intérieure cylindrique, notamment une surface de roulement de cylindre (2) présentant des matériaux de duretés différentes en sens axial, **caractérisé par** les étapes suivantes :
- dégrossissement au tour de là surface intérieure cylindrique,
- au moins une zone moins dure (6) de la surface intérieure cylindrique étant dégrossie au tour avec un diamètre supérieur à au moins une zone plus dure (4),
- rectification d'au moins la zone plus dure (4) jusqu'au niveau du diamètre de la zone moins dure (6).

2. Procédé selon la revendication 1, **caractérisé en ce que** la zone plus dure (4) et la zone moins dure (6) sont soumises à une rectification de finition à une cote finale (8).

3. Procédé selon la revendication 2, **caractérisé en ce qu'**un enlèvement radial de matériau par la rectification de finition est inférieur à 10 *µ*m.

4. Procédé selon la revendication 2 ou 3, **caractérisé en ce que** la zone plus dure (4) et la zone moins dure (6) sont soumises à une rectification de finition par des meules différentes.

5. Procédé selon l'une des revendications précédentes, **caractérisé en ce que** des stries de tournage (18) ou de rectification demeurent sur la zone moins dure (6) après la rectification de la zone plus dure.

6. Procédé selon l'une des revendications précédentes, **caractérisé en ce que** dans une zone de transition (16) entre la zone moins dure (6) et la zone plus dure (4), la zone plus dure (4) est soumise à un dégrossissement au tour jusqu'au diamètre de la zone moins dure (6).

7. Procédé selon l'une des revendications précédentes, **caractérisé en ce qu'**un traitement chimique de surface consécutif n'est exécuté que sur la zone plus dure (4).
